# EUROPÄISCHE PATENTANMELDUNG

(11) **EP 1 491 467 A1**
(43) Veröffentlichungstag der Anmeldung: **29.12.2004**
(21) Anmeldenummer: 03405477.5
(22) Anmeldetag: 27.06.2003
(51) Int. Cl.: B65G 47/244

(54) **Einrichtung zur Änderung der Lage durch Drehen einzelner oder übereinandergestapelter, auf einem Transportweg geförderter Produkte**

(71) Anmelder: Müller Martini Holding AG, 6052 Hergiswil (CH)
(72) Erfinder: Nielsen, Erik Vind, 6700 Esbjerg (DK)

(57) **Zusammenfassung**

Eine Einrichtung (1) zur Aenderung der Lage durch Drehen einzelner oder übereinander gestapelter, auf einem Transportweg geförderter Produkte (2), besteht aus einer die Produkte (2) auf dem Transportweg fördernden Fördervorrichtung (3) und einer die Produkte (2) zum Drehen um eine zur Förderrichtung (F) senkrechte Achse (18) an dem Transportweg angeordneten Drehvorrichtung (13), die an einem entlang eines aus seitlich beabstandeten Förderbändern (5, 6) gebildeten Förderabschnittes der Fördervorrichtung (3) verfahrbaren Gestell (12) befestigt ist, wobei die Fördertrums der ein Förderelement (4) bildenden Förderbänder (5, 6) jeweils um an dem Gestell (12) drehbar gelagerte, eine sich senkrecht zur Förderrichtung (F) nach unten erstreckende Schlaufe (17) bildende Umlenkrollen (16, 16') geführt sind.

## Beschreibung

Die Erfindung betrifft eine Einrichtung zur Aenderung der Lage durch Drehen einzelner oder übereinander gestapelter, auf einem Transportweg geförderter Produkte, bestehend aus einer die Produkte auf dem Transportweg fördernden Fördervorrichtung und einer die Produkte zum Drehen um eine zur Förderrichtung senkrechte Achse an dem Transportweg angeordneten Drehvorrichtung, die an einem entlang eines aus seitlich beabstandeten Förderbändern gebildeten Förderabschnittes der Fördervorrichtung verfahrbaren Gestell befestigt ist.

Um die Orientierung eines aus Produkten gebildeten Stapels oder einzelner Produkte eines Produktestromes durch Drehen um eine senkrechte Achse gegenüber der Fortbewegungsrichtung des Produktestromes ändern zu können, um die Produkte beispielsweise vorbereitet einer Palettiereinrichtung zuführen zu können, ist eine sog. Turning station der Firma SOLEMA S.n.C., Via Carducci 18, 24066 Pedrengo-BG, Italien, bekannt, bei der die Produkte auf zwei seitlich versetzten Förderbändern einer Drehvorrichtung zugeführt werden, die zwischen den Förderbändern eine drehbar angetriebene Auflagescheibe und eine im Abstand darüber angeordnete absenkbare, frei drehbare Druckscheibe aufweist.
Sobald die Drehvorrichtung von den zu drehenden Produkten erreicht ist, wird die Auflagescheibe angehoben, die Druckscheibe abgesenkt und das eingespannte Produkt / der eingespannte Produktestapel gedreht. Zu diesem Vorgehen sind die ein Fördertrum bildenden Förderbänder soweit voneinander entfernt, dass die Produkte dazwischen an der Unterseite durchhängen. Wird der Abstand zwischen den Förderbändern aufgrund eines Formatwechsels bei den Produkten geändert, derart dass günstige Drehverhältnisse für die Produkte entstehen, ist die Auflagescheibe auszutauschen. Dadurch entstehen Umbauarbeiten und es ist ein Bestand an mehreren Auflagescheiben mit unterschiedlichen Durchmessern erforderlich.

Aufgabe der vorliegenden Erfindung ist es, bei einem Formatwechsel der Produkte, die Umbauarbeiten im Bereich der Drehvorrichtung mit einer einfachen Vorrichtung erheblich reduzieren zu können.

Erfindungsgemäss wird diese Aufgabe dadurch gelöst, dass die Fördertrums der ein Förderelement bildenden Förderbänder um an dem Gestell drehbar gelagerte, eine sich senkrecht zur Förderrichtung nach unten erstreckende Schlaufe bildende Umlenkrollen geführt sind.

Es erweist sich als vorteilhaft, wenn der seitliche Abstand der Förderbänder zur Anpassung an die unterschiedlichen Formate der Produkte unveränderbar ist.

Vorzugsweise ist die an dem Gestell befestigte Drehvorrichtung durch eine Hubvorrichtung zum Anheben der Produkte über die Fördertrums der Förderbänder und durch eine gegenüber resp. darüberstehende, die Produkte auf das Huborgan drückende, drehbar angetriebene Druckvorrichtung ausgebildet, sodass ein präzises Aendern der Lage der Produkte beim Drehen durchgeführt werden kann.

Die Hubvorrichtung ist zweckmässig durch ein aus einer unterhalb des Fördertrums vorgesehenen Ausgangslage resp. aus den Schlaufen der Fördertrums und dem Zwischenraum zwischen den Förderbändern heraus in eine oberhalb der Fördertrums vorgesehene Betriebsposition höhenverstellbares und drehbares Huborgan ausgebildet.

Damit bei einem Formatwechsel der Produkte an der Drehvorrichtung keine Aenderung vorgenommen werden muss, ist es vorteilhaft, wenn das Huborgan als Drehkreuz zweier sich kreuzender Tragleisten ausgebildet ist, derart, dass das Huborgan in der Ausgangsposition mit einer Tragleiste zwischen den Förderbändern und mit der anderen Tragleiste quer zur Förderrichtung innerhalb der Schlaufen der Fördertrums der Förderbänder steht.
D.h., dass bei einer Lageänderung der Produkte um 90° oder 180° die in der Ausgangslage zwischen den Förderbändern ausgerichtete Tragleiste nach der Drehung sich in den Schlaufen der Fördertrums befindet.

Die Druckvorrichtung kann eine senkrecht antreibbare Gegendruckplatte oder ein anderes, einen Gegendruck aufbringendes Organ aufweisen.

Das Huborgan und die Gegendruckplatte sind zur Lageänderung der Produkte vorteilhaft gemeinsam antreibbar, wobei jeweils das Huborgan oder die Gegendruckplatte frei drehbar gelagert oder beide mit gleicher Drehzahl angetrieben sein können.

Das Gestell ist vorzugsweise entlang des Förderelementes reversierend antreibbar, so dass die Produkte im Gleichlauf mit der Geschwindigkeit der Fördertrums erfasst, gedreht und wieder abgesetzt werden können.
Die Rücklaufgeschwindigkeit zur Erfassung weiterer Produkte an dem vorderen Ende des Förderelementes kann höher sein als die Fördergeschwindigkeit beim Drehvorgang der Produkte.
Es ist möglich, dass mit der vorgeschlagenen Einrichtung eine kontinuierliche Verarbeitung durchgeführt wird.

Die vorgeschlagene Einrichtung zeichnet sich dadurch weiter aus, indem jeweils ein Motor zum Verfahren des Gestells entlang des Förderelementes und das antreibbare Huborgan wie auch die Druckvorrichtung mit einer Steuerung geberseitig steuerwirksam verbunden sind, damit ein störungsfreier Verarbeitungsprozess durchführbar ist.

Dementsprechend ist die Steuerung nehmerseitig mit vorgeschalteten, die Höhe und das Eintreffen der Produkte an dem Förderelement feststellenden Sensoren verbunden, die für ein zuverlässiges Funktionieren der Einrichtung sorgen.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels erläutert. Es zeigen:
- Fig. 1: einen Längsschnitt durch die Einrichtung gemäss I - I in Fig. 2,
- Fig. 2: eine Ansicht der Einrichtung gemäss Pfeil II in Fig. 1,
- Fig. 3A - 3G: einen sequentiellen Verlauf der Verarbeitungsweise resp. Funktionsweise der Einrichtung.

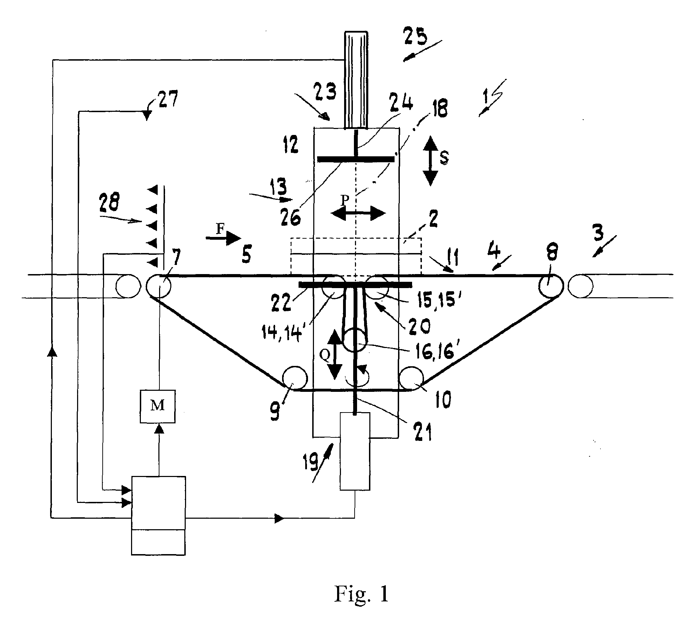

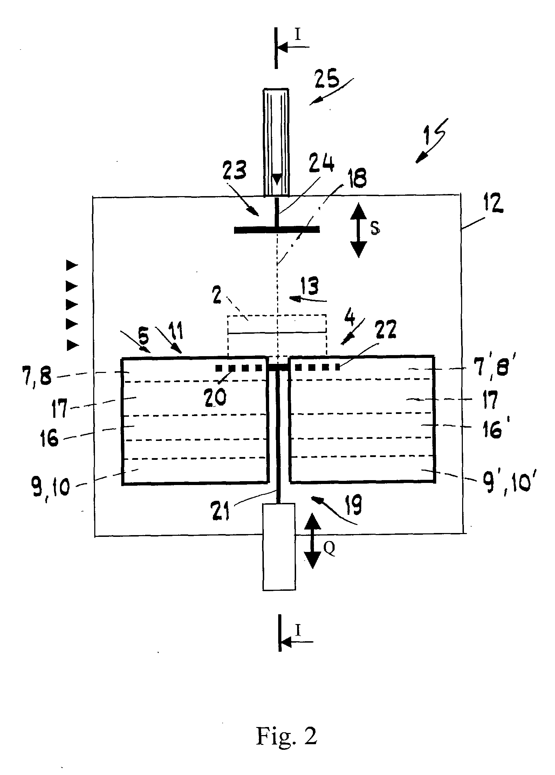

Die Fig. 1 und 2 zeigen eine Einrichtung 1 zur Aenderung der Lage durch Drehen einzeln oder übereinanderliegend gestapelt zugeführter Produkte 2. Bei den Produkten 2 handelt es sich um stapelbare Zeitschriften, Broschuren, Bücher, Werkstücke oder dgl. Die Einrichtung 1 liegt an einem Transportweg, der durch eine Fördervorrichtung 3 ausgebildet ist und weist einen zugeordneten Förderabschnitt der Fördervorrichtung 3 auf. Die Förderrichtung der Produkte resp. Produktestapel 2 ist durch Pfeil F vermerkt. Der Förderabschnitt ist als Förderelement 4 ausgebildet und durch einen Elektromotor M angetrieben.

Das Förderelement 4 besteht aus wenigstens zwei im Abstand nebeneinander angeordneten Förderbändern 5, 6, die um jeweils zwei Förderrollen 7, 7'; 8, 8' und zwei Spannrollen 9, 9'; 10, 10' angetrieben sind. Die Förderbänder 5, 6, die gemeinsam etwa eine Förderbreite aufweisen, die derjenigen der Fördervorrichtung 3 entspricht, bilden ein Fördertrum 11, das in Förderrichtung F ein Gestell 12 durchsetzt, an welchem eine Drehvorrichtung 13 befestigt ist.
An dem Gestell 12, das entlang des stationären Förderelementes 4 in Förderrichtung F und zurück, von dem vorderen Förderende zum hinteren Förderende antreibbar ist, sind jeweils beidseits des Förderelementes 4 zwei Umlenkrollen 14, 14'; 15, 15' und eine Schlaufenrolle 16, 16' in dreieckförmiger Anordnungsweise gelagert, derart, dass eine, mit dem Gestell 12 entlang dem Förderelement 4 versetzbare, in der Länge konstante Schlaufe 17, 17' entsteht. Die Schlaufe 17, 17' ist etwa rechtwinklig zu den Fördertrums der Förderbänder 5, 6 nach unten ausgerichtet. Die reversierbare Bewegung des Gestells 12 ist durch Doppelpfeil P in Fig. 1 festgehalten.
Die Geschwindigkeit des Gestells 12 in Förderrichtung F entspricht der Fördergeschwindigkeit des Fördertrums 11 der Förderbänder 5, 6, sodass die Produkte 2 während dem Transport im Gleichlauf von Fördertrum 11 und Gestell 12 erfassbar und durch die Drehvorrichtung 13 anheb- und drehbar sind.
Zur Aenderung der Lage durch Drehen der Produkte 2 um eine zur Fortbewegungsrichtung F senkrechte Achse, ist unterhalb des Förderdertrums 11 zwischen den Förderbändern 5, 6 eine Hubvorrichtung 19 mit dem Gestell 12 verbunden, die ein in senkrechter Richtung über das Fördertrums 11 hinaus anheb- und absenkbares Huborgan 20 aufweist. Das Huborgan 20 weist am oberen resp. freien Ende einer pneumatisch oder elektromechanisch auf und ab betätigbaren Hubstange 21 -Doppelpfeil Q- sich rechtwinklig zu einer Tragfläche kreuzende Tragleisten 22 auf, von denen sich eine zwischen den Förderbändern 5, 6 in Förderrichtung F und die andere innerhalb der Schlaufen 17, 17' resp. quer zur Förderrichtung F in horizontaler Richtung erstrecken. Gegenüber von der Hubvorrichtung 19, oberhalb des Fördertrums 11 resp. den Fördertrums der Förderbänder 5, 6 ist an dem Gestell 12 eine entgegengerichtet wirksame Druckvorrichtung 23 befestigt. Diese weist eine an einem Kolben 24 einer pneumatischen Kolben-Zylinder Einheit 25 befestigte Druckplatte 26 auf, die in Richtung des Doppelpfeils S anheb- und absenkbar ist. Die Druckplatte 26 drückt auf die Oberseite der Produkte 2 bevor die Drehung des Drehkreuzes resp. Huborgans 20 eingeleitet wird. Die Druckplatte 26 ist in der Achse 18 frei drehbar oder mit dem Drehkreuz antreibbar gelagert.
Letzterenfalls werden Huborgan 20 und Druckplatte 26 beim Drehen von Produkten 2 gemeinsam und mit gleicher Drehzahl angetrieben.

Das Gestell 12, an dem die Hubvorrichtung 19 und die Druckvorrichtung 13 befestigt sind, ist in Förderrichtung F jeweils mit der Geschwindigkeit F des Fördertrums 11 angetrieben, sodass der Drehvorgang während dem Fördern der Produkte 2 erfolgen kann. Die Produkte 2 werden, nachdem sie einen Sensor 27, der die Anwesenheit eines Produktes 2 feststellt, und einen Höhensensor 28, der die Höhe eines Produktes 2 oder eines Produktestapels misst, passieren von dem über den Fördertrum 11 hochfahrenden Huborgan 20 der Hubvorrichtung 19 und dem nach der Höhe des Produktes/der Produkte 2 sich absenkenden Druckplatte 26 erfasst und in die gewählte Lage gedreht, wobei hierzu das Huborgan 20 zum Drehen der Produkte 2 einen konstanten Abstand über dem Fördertrum 11 einnehmen kann. Nach dem Drehen lösen sich Huborgan 20 und Druckplatte 26 von den Produkten 2, was schon durch einfaches Absenken des Huborgans 20 geschehen kann. Bevor das Huborgan 20 die Ausgangsposition unterhalb des Fördertrums 11 erreicht, werden die Produkte 2 vom Fördertrum 11 wieder erfasst und weitertransportiert.
Die Sensoren 27, 28 sind an eine Steuerung 29 angeschlossen, welche von einem programmierten Rechner 30 mit Daten zum Betrieb des Förderelementes 4, des Gestells 12, der Hub- resp. Drehvorrichtung 19 und der Druckvorrichtung 23 versorgt wird.

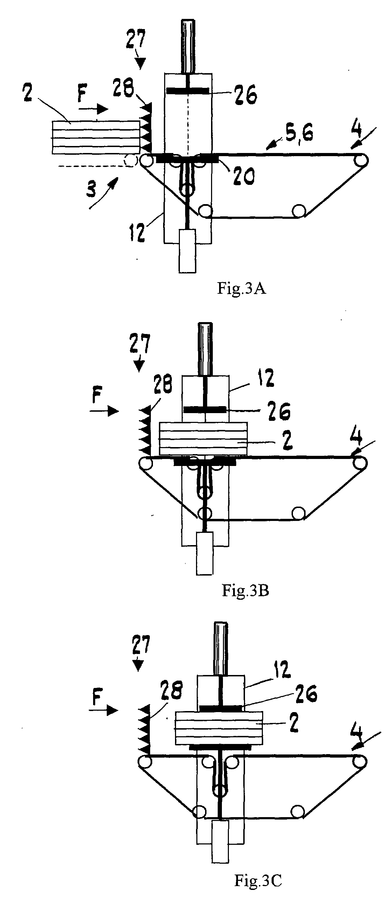

Fig. 3A zeigt eine erste Sequenz des mit der Einrichtung 1 durchgeführten Verarbeitungsvorgangs. Der auf der Fördervorrichtung 3 transportierte Produktestapel 2 erreicht in Förderrichtung F die dem Förderelement 4 vorgeschalteten Sensoren 27, 28, die die Anwesenheit und Höhe des Stapels detektieren. Die Einrichtung 1 befindet sich in einer Ausgangsstellung, im welcher das Gestell 12 an dem vorderen Ende des Förderelementes 4 sich befindet, das Huborgan 20 unterhalb den Fördertrums 11 und die Druckplatte 26 über der maximalen bzw. der effektiven Stapelhöhe steht. Die Förderbänder 5, 6 des Förderelementes 4 laufen mit der Fördergeschwindigkeit der Fördervorrichtung 3 um.

Fig. 3B zeigt, dass der Produktestapel 2 das Gestell 12 erreicht hat und von der Drehvorrichtung erfasst werden kann. Die Druckplatte 26 wird nun weiter abgesenkt und das Huborgan 20 angehoben, soweit, dass es den Fördertrum 11 übersteht.

Sobald die Höhe eines Produktes 2 oder Produktestapels von Sensor 28 erfasst ist, stellt die Druckvorrichtung 23 die Druckplatte 26 auf eine Höhe ein, von der aus nurmehr ein kurzer Hub die Oberseite eines Produktes 2 oder Produktestapels notwendig ist.

Gemäss Fig. 3C befindet sich das Huborgan 20 über dem Trum 11 und die Druckplatte 26 hat die Oberseite des Produktestapels 2 erreicht; das Gestell 12 hat sich inzwischen in Förderrichtung F weiter fortbewegt.

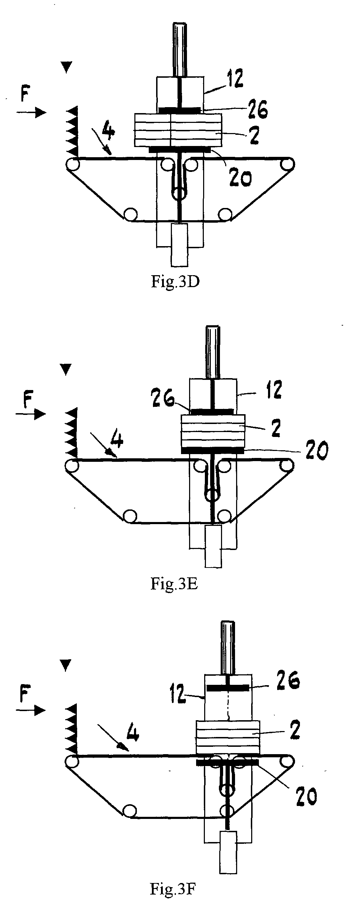

Danach wird auf dem weiteren Transportweg -wie in Fig. 3D erkennbar- der Drehvorgang um eine senkrechte Achse durchgeführt, sodass gemäss Fig. 3E der Produktestapel 2 eine um 90° geänderte Lage einnimmt.
Huborgan 20 und Druckplatte 26 werden nun von dem Produktestapel 2 gelöst und das Förderelement 4 übernimmt den Weitertransport (Fig. 3F).

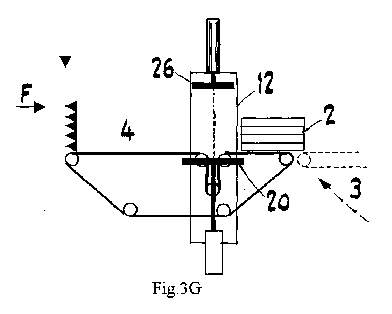

Anschliessend verlässt der Produktestapel 2 das Förderelement 4 auf der Fördervorrichtung 3 (Fig. 3G); das Gestell 12 kann gleichzeitig in die Ausgangslage nach Fig. 3A zurückfahren werden.

Das Gestell 12 ist somit völlig unabhängig vom Antrieb des Förderelementes 4 verfahrbar.

## Patentansprüche

1. Einrichtung (1) zur Aenderung der Lage durch Drehen einzelner oder übereinander gestapelter, auf einem Transportweg geförderter Produkte (2), bestehend aus einer die Produkte (2) auf dem Transportweg fördernden Fördervorrichtung (3) und einer die Produkte (2) zum Drehen um eine zur Förderrichtung (F) senkrechte Achse (18) an dem Transportweg angeordneten Drehvorrichtung (13), die an einem entlang eines aus seitlich beabstandeten Förderbändern (5, 6) gebildeten Förderabschnittes der Fördervorrichtung (3) verfahrbaren Gestell (12) befestigt ist, **dadurch gekennzeichnet, dass** die Fördertrums der ein Förderelement (4) bildenden Förderbänder (5, 6) um an dem Gestell (12) drehbar gelagerte, eine sich senkrecht zur Förderrichtung (F) nach unten erstreckende Schlaufe (17) bildende Umlenkrollen (16, 16') geführt sind.

2. Einrichtung nach Anspruch 1, **dadurch gekennzeichnet, dass** der seitliche Abstand der parallel verlaufenden Förderbänder (5, 6) unveränderbar ist.

3. Einrichtung nach Anspruche 1 oder 2, **dadurch gekennzeichnet, dass** die an dem Gestell (12) befestigte Drehvorrichtung (13) durch eine Hubvorrichtung (19) und eine gegenüberstehende antreibbare Druckvorrichtung (23) gebildet ist.

4. Einrichtung nach Anspruch 3, **dadurch gekennzeichnet, dass** die Hubvorrichtung (19) ein aus einer unterhalb des Fördertrums vorgesehenen Ausgangsposition in eine oberhalb der Fördertrums der Förderbänder (5, 6) vorgesehene Betriebsposition höhenverstellbares und drehbar angetriebenes Huborgan (20) aufweist.

5. Einrichtung nach Anspruch 4, **dadurch gekennzeichnet, dass** das Huborgan (20) als Drehkreuz zweier sich kreuzender Tragleisten (22) gebildet ist, von denen in der Ausgangsposition des Huborgans (20) eine Tragleiste (22) zwischen den Förderbändern (5, 6) parallel zur Förderrichtung (F) und die andere Tragleiste (22) quer zur Förderrichtung (F) innerhalb der Schlaufen (17) angeordnet sind.

6. Einrichtung nach einem der Ansprüche 3 bis 5, **dadurch gekennzeichnet, dass** die Druckvorrichtung (23) eine senkrecht antreibbare Gegendruckplatte (26) aufweist.

7. Einrichtung nach Anspruch 6, **dadurch gekennzeichnet, dass** Huborgan (20) und Gegendruckplatte (26) gemeinsam drehend antreibbar sind.

8. Einrichtung nach einem der Ansprüche 1 bis 7, **dadurch gekennzeichnet, dass** das Gestell (12) entlang des Förderelementes (4) reversierend antreibbar ist.

9. Einrichtung nach einem der Ansprüche 1 bis 8, **dadurch gekennzeichnet, dass** jeweils ein Elektromotor zum Verfahren des Gestells (12) entlang des Förderelementes (4) und das an dem Gestell (12) befestigte Huborgan (20) sowie die Druckvorrichtung (23) mit einer Steuerung (29) geberseitig verbunden sind.

10. Einrichtung nach Anspruch 9, **dadurch gekennzeichnet, dass** die Steuerung (29) nehmerseitig mit vorgeschalteten, die Höhe und das Eintreffen der Produkte (2) feststellenden Sensoren (27, 28) und dem Förderelement (4) verbunden ist.
